# EUROPEAN PATENT APPLICATION

(11) **EP 4 480 696 A1**
(43) Date of publication of application: **25.12.2024**
(21) Application number: 24178374.5
(22) Date of filing: 28.05.2024
(51) Int. Cl.: B32B 3/26, B32B 3/30, B32B 21/02, B32B 21/06, B32B 3/06, E04F 13/08, E04F 13/10, E04B 1/86

(54) **ACOUSTIC DAMPENING PANEL**

(30) Priority: 20.06.2023 BE 202305502; 21.09.2023 BE 202305777; 15.04.2024 BE 202405216
(71) Applicant: Unilin, BV, 8710 Wielsbeke (BE)
(72) Inventor: Holvoet, Kevin, 8710 Wielsbeke (BE); De Fauw, Suzanne, 8710 Wielsbeke (BE)
(74) Representative: Unilin Technologies

(57) **Abstract**

The panel (6) has a wood-based core (14) and a decor layer (16) on the front side which is laminated to the wood-based core (14). On the rear side, the panel has a plurality of holes (32) which do not extend through the full thickness of the wood-based core (14). The front side of the panel has second holes (34, 35) which pass through the decor layer and as far as into a part of the thickness of the wood-based core (14). At least some of the second holes end at least partly in the holes (32), so that passages are created in the thickness of the wood-based core (14).

## Description

The invention relates to wood-based panels which have a decorative top layer, wherein the panels have acoustic damping properties. The invention relates in particular to such panels which are used as decorative wall covering.

WO2019/003100A1 describes wall panels. These wall panels may be wood-based and have a decor layer. The wall panels are provided with coupling parts on two opposite edges for coupling the panels to form a wall covering.

A problem or such panels is that they are lacking in sound-damping properties.

It is therefore an object of the invention to provide panels which have improved sound-damping properties.

The first aspect of the invention relates to a panel. The panel has a wood-based core and a decor layer on the front side which is laminated to the wood-based core. On the rear side, the panel has a plurality of holes which do not extend through the full thickness of the wood-based core. The front side of the panel has second holes which pass through the decor layer and as far as into a part of the thickness of the wood-based core. At least some of the - and preferably all - second holes at least partly end in the holes, so that passages are created in the thickness of the wood-based core.

The panel of the invention has the advantage that passages are provided in the panel in an elegant way which may provide sound insulation.

In embodiments of the invention, the decorative appearance of the panel is not disturbed.

In embodiments of the invention, the second holes ensure an attractive visual aspect on the decorative side of the panel.

The holes are preferably directed vertically. This means that the holes are directed at right angles to the panel.

The second holes are preferably directed vertically. This means that the second holes are directed at right angles to the panel.

The second holes thus do not pass through the entire thickness of the wood-based core.

A preferred embodiment of the panel of the invention is characterized in that the depth in the wood-based core of the holes is greater than the depth in the wood-based core of the second holes. This has the advantage that the second holes in the front side - which are preferably finer than the holes which are situated on the rear side of the panel - can be produced more easily. An additional advantage is the fact that the decor on the front side of the panel is disturbed to a lesser degree, thus resulting in a visually attractive decorative panel.

More preferably, the depth in the wood-based core of the holes is at least double the depth in the wood-based core of the second holes. More preferably, the depth in the wood-based core of the holes is at least three times the depth in the wood-based core of the second holes.

A preferred embodiment of the panel according to the invention is characterized in that the thickness of the wood-based core is at least 8 mm, and preferably at least 10 mm.

A preferred embodiment of the panel according to the invention is characterized in that the bottom of the holes is situated at a distance of less than 2 mm from the front of the panel. This embodiment has the advantage that the panel has improved sound damping.

More preferably, the bottom of the holes is at a distance of less than 1.5 mm from the front of the panel. More preferably, the bottom of the holes is at a distance of less than 1 mm from the front of the panel. More preferably, the bottom of the holes is at a distance of less than 0.8 mm from the front of the panel. More preferably, the bottom of the holes is at a distance of less than 0.6 mm from the front of the panel. These embodiments have the advantage that the panel has improved sound damping.

More preferably, the bottom of the holes is at a distance of at least 0.5 mm from the front of the panel. This embodiment has the advantage that a panel is obtained with good sound damping which still has sufficiently good strength properties.

A preferred embodiment of the panel according to the invention is characterized in that the bottom of the holes is situated at a distance from the front of the panel which is less than 20 % of the thickness of the thickness of the wood-based core. This embodiment has the advantage that the panel has improved sound damping.

More preferably, the bottom of the holes is at a distance from the front of the panel which is less than 15 % of the thickness of the wood-based core. More preferably, the bottom of the holes is at a distance from the front of the panel which is less than 8 % of the thickness of the wood-based core. More preferably, the bottom of the holes is at a distance from the front of the panel which is less than 6 % of the thickness of the wood-based core. These embodiments have the advantage that the panel has improved sound damping.

More preferably, the bottom of the holes is at a distance from the front of the panel which is at least 5 % of the thickness of the wood-based core. This embodiment has the advantage that a panel is obtained with good sound damping which still has sufficiently good strength properties.

A preferred embodiment of the panel according to the invention is characterized in that the individual cross section of the second holes is smaller than the individual cross section of the holes. The expression "individual cross section" is understood to mean the cross section, in square millimetres, of individual holes or individual second holes.

More preferably, the individual cross section of the second holes is smaller than 0.8 %; and more preferably smaller than 0.5 %, of the individual cross section of the holes.

A preferred embodiment is characterized in that the decor layer comprises a resin-coated printed paper layer. As a result thereof, it is possible to achieve a decor which, for example, imitates a wood panel.

The resin of the resin-coated printed paper layer may be a melamine formaldehyde resin. The resin of the resin-coated printed paper layer may be an acrylate or a polyurethane resin.

Preferably, the resin-coated printed layer paper is laminated directly onto the wood-based core. This ensures an efficient production process of the panel.

The decor layer may preferably be laminated onto the wood-based core by means of Direct Pressure Lamination (DPL). This makes it possible to produce the decor layer in an efficient way.

A preferred embodiment is characterized in that a balance layer is laminated onto the rear side of the wood-based core, with the plurality of holes passing through this balance layer. Such a balance layer improves the dimensional stability of the panel.

The balance layer may preferably comprise or consist of a resin-coated paper layer. The resin of this resin-coated paper layer may be a melamine formaldehyde resin. The resin of this resin-coated paper layer may be an acrylate or a polyurethane resin.

Preferably, the wood-based core is or comprises a particleboard or a wood fibreboard (preferably a Medium Density Fibreboard or a High Density Fibreboard). These panels may be made from recycled wood or from wood which cannot readily be used for other purposes.

A preferred embodiment is characterized in that the individual cross section of the holes is greater than the individual cross section of the second holes. This embodiment has the advantage that the decorative side of the panel remains highly attractive visually - since the cross section of the second holes is limited - while a very efficient sound insulation is achieved.

The holes preferably have a circular cross section. This has the advantage that the holes can easily be provided by means of drilling.

Preferably, the holes have a circular cross section with a diameter of less than 12 mm, more preferably with a diameter of less than 10 mm.

Preferably, the holes are arranged in a square pattern. This facilitates the production of the holes in the panel.

Patterns other than a square pattern are also possible.

A preferred embodiment is characterized in that the holes form at least 4% of the surface of the rear side of the wood-based core, preferably at least 10%, more preferably at least 15%, more preferably at least 20%, more preferably at least 30%. Such embodiments are advantageous because they give the panel good acoustic properties.

A preferred embodiment is characterized in that the second holes form at least 5% of the surface of the decorative side of the panel, preferably at least 8%, more preferably at least 10%, more preferably at least 12%, even more preferably at least 14%. These panels have the advantage that they provide good sound insulation and that the visual aspect of the decorative front side of the panel is highly attractive.

A preferred embodiment is characterized in that the percentage of perforation on the decorative side of the panel multiplied by the percentage of perforation on the rear side of the panel is at least 1%, more preferably is at least 1.5%, more preferably is at least 2.5%, more preferably is at least 4% is, more preferably is less than 10%, and more preferably is less than 6%. Such preferred embodiments have the advantage that they provided improved acoustic properties; the panel ensures a better sound insulation, while the panel maintains good mechanical properties.

A preferred embodiment is characterized in that the second holes are grooves, preferably having a width of less than 6 mm, more preferably less than 5 mm, more preferably less than 4 mm, more preferably having a width of less than 3.5 mm. This embodiment has the advantage that the second holes - in the form of grooves - can easily be produced, while only disturbing the visual appearance of the decorative front side to a limited extent, in particular if the width of the grooves is limited, and even offer an additional attractive visual aspect.

In combination with the background colour (for example black) of the wood-based core, it is also possible to achieve an attractive decorative effect in combination with excellent acoustic properties of the panel.

More preferably, the panel is rectangular and elongate and the grooves run parallel with one of the sides of the panel. This ensures that the grooves can easily be produced. It also makes it possible to not provide grooves at a certain distance from the edges of the panel with which the grooves are parallel, so that the panel is not weakened at the edges and specifically at optional coupling parts. This furthermore ensures that the image of the grooves can continue at the edges of coupled panels, so that a more attractive image of a covering with coupled panels is achieved.

A preferred embodiment is characterized in that the grooves have a length of less than 100 mm, more preferably less than 50 mm, more preferably less than 30 mm, more preferably less than 15 mm. This embodiment has the advantage that the mechanical properties and the flatness of the panel are retained in an optimum manner. In addition, this embodiment also provides a visually attractive image.

A preferred embodiment is characterized in that the grooves have a rectangular cross section, optionally with a rounding on the short sides of the rectangular cross section or wherein the short sides are arch-shaped. This embodiment ensures a visually attractive image.

In a preferred embodiment, the grooves have vertical walls.

In a preferred embodiment, the grooves have oblique walls.

In a preferred embodiment, the grooves have a rounded bottom.

In a preferred embodiment of the invention, the grooves are positioned in such a way that they correspond with holes, so that passages through the thickness of the wood-based core are produced.

Preferably, the grooves are evenly distributed. More preferably, the grooves may be distributed in a square pattern. These embodiments provide a visually attractive image of the decorative panel.

More preferably, the grooves are arranged in such a manner that the regular pattern continues along the edges of two panels which adjoin one another at their parallel edges. This provides a visually very attractive pattern in coverings made using these panels.

A preferred embodiment is characterized in that, in at least one direction, the distance between the centre of the holes is equal to or is an integer multiple of the distance between the centre of the grooves, or in that, in at least one direction, the distance between the centre of the grooves is equal to or is an integer multiple of the distance between the holes. This embodiment has the advantage that the holes and grooves coincide to a maximum degree, so that grooves end in holes to a maximum degree, as a result of which the panel has improved sound-damping properties.

More preferably, the panel is rectangular and this direction is at right angles to one of the edges of the panel.

A preferred embodiment is characterized in that the second holes have a circular cross section. In this embodiment, the second holes can easily be produced. The second holes may be made by means of a drilling operation. It is likewise possible to produce the second holes by means of piercing - in particular if they have a diameter of less than 1 mm. During this piercing, material is pushed sideways and downwards.

Preferably, the second holes have a cross section which remains constant throughout the decor layer and at least as far as into a part of the thickness of the wood-based core.

Preferably, the second holes have a diameter of less than 3 mm, more preferably less than 2 mm, more preferably less than 1.5 mm, more preferably less than 1 mm. These embodiments have the advantage that the second holes do not disturb the visual aspect of the decorative side of the panel due to their small size.

The second holes are preferably arranged in a square pattern. However, other patterns are also possible.

In a preferred embodiment, both the holes and the second holes have a circular cross section, with the cross section of the second holes being smaller than the cross section of the holes.

In one embodiment, the second holes have an equivalent diameter of less than 3 mm, more preferably less than 2 mm, more preferably a diameter of less than 1.5 mm, more preferably a diameter of less than 1 mm. These embodiments have the advantage that the second holes do not disturb the visual aspect of the decorative side of the panel due to their small size. The expression equivalent diameter is intended to mean the diameter of a circle which has the same surface as a not necessarily circular hole. It is possible, for example, to pierce second holes which are not circular in cross section, but have, for example, a triangular cross section, optionally with rounded corners.

The second holes may be arranged in parallel rows, with the panel being rectangular, wherein the rows make an angle with the short edges of the panel of between 20° and 70°, preferably between 35° and 60°. Such an arrangement has the advantage that the second holes can easily be produced. Preferably, in the lines, the distance between the centre of the second holes is equal to the distance between the lines.

A preferred embodiment is characterized in that the panel is rectangular with two long edges and two short edges, in which case there are no second holes within a distance of at least 10 mm - and more preferably within a distance of at least 20 mm, more preferably within a distance of at least 30 mm, more preferably within a distance of at least 40 mm - from the long edges. These embodiments have the advantage that the edges retain their strength and other mechanical properties - in particular if they are provided with coupling parts. As a result thereof, the panels may still be coupled to form a visually attractive covering (for example a wall covering) by means of a durable coupling.

A preferred embodiment is characterized in that the second holes are configured in such a way at the surface of the panel that, when two such panels are coupled or placed next to one another, the distribution pattern of the second holes visually smoothly continues along the edge of the coupled or juxtaposed panels.

A preferred embodiment is characterized in that the panel is rectangular, either square or elongate, with the panel being provided, on at least two opposite edges, with coupling parts which make it possible for two of such a panels to be coupled to each other on the respective edges, in which case a locking is realised in the coupled state, on the one hand in the direction at right angles to the plane of the coupled panels; and on the other hand in the direction at right angles to the coupled edges and in the plane of the coupled panels. The coupling parts comprise at least a male part in the form of a tongue and at least a female part in the form of a groove. This groove is flanked by a rear lip and a front lip. The rear lip preferably projects further on the respective edge than the front lip.

Panels provided with such coupling means make it possible to easily install the panels to form a covering having an appealing uninterrupted visual appearance.

More preferably, the coupling parts are substantially configured as a tongue and a groove delimited by a front lip and a rear lip, wherein this tongue and groove are substantially responsible for the locking in the direction at right angles to the plane of the coupled panels. The tongue and the groove comprise locking parts, wherein these locking parts are substantially responsible for the locking in the direction at right angles to the coupled edges and in the plane of the coupled panels. More preferably, the locking parts comprise a projection on the rear lip of the groove and a recess cooperating therewith which is situated on the rear side of the tongue.

In a preferred embodiment in which the second holes are grooves, these grooves are parallel with the opposite edges of the panel which are provided with the coupling parts. More preferably, no grooves are provided in the surface on the front side of the panel between the distal end of the front lip and the proximal end of the groove which forms the female coupling part. With such embodiments, the absence of grooves on the front side of the panel between the distal end of the front lip and the proximal end of the groove which forms the female coupling part ensures that the panel is not weakened at the coupling means. This makes it possible to achieve good coupling of the panels.

A preferred embodiment is characterized in that no second holes are provided on the front side of the panel in the zone of the panel between the distal end of the front lip and the proximal end of the groove which forms the female coupling part.

This embodiment has the advantage that the strength of the panel is retained at the groove, so that coupling can be effected without any problems and a strong coupling can be achieved between coupled panels in a covering produced by means of these panels.

This embodiment may be used both if the second holes are or contain grooves, and if the second holes have a circular cross section.

A preferred embodiment is characterized in that no second holes are provided on the front side of the panel in the zone of the panel along the edge which includes the tongue, within a distance of at least 20 mm, and preferably within a distance of at least 25 mm, from the distal end on the front side of this edge.

This embodiment has the advantage that the strength of the panel is retained on the tongue, so that coupling can be effected without problems and a strong coupling is achieved between coupled panels in a covering produced by means of these panels.

This embodiment may be used both if the second holes are or contain grooves, and if the second holes have a circular or other cross section.

A preferred embodiment is characterized in that at least one second hole is provided on the front side of the panel in the zone between the distal end on the front side of the panel along the edge which includes the tongue and the proximal end on this edge of the recess on the rear side of the tongue. This embodiment may be used both if the second holes are or contain grooves, and if the second holes have a circular or other cross section. This embodiment has the advantage that an appealing uninterrupted image of the second holes (for example grooves) can be achieved on the front side of coupled panels.

A preferred embodiment is characterized in that no holes are provided on the rear side of the panel along the edge which includes the groove which forms the female coupling part within a distance of at least 8 mm, and preferably of at least 10 mm, from the distal end of the rear lip on this edge.

This embodiment has the advantage that the strength of the panel is retained along the groove, so that coupling can be effected without any problems and a strong coupling is achieved between coupled panels in a covering produced by means of these panels.

A preferred embodiment is characterized in that the wood-based core is coloured black. This ensures that the second holes cause even less disturbance of the visual aspect of the decorative panel.

A preferred embodiment is characterized in that the decor layer comprises a decorative print and a texture, wherein the texture is in register with the print. Such embodiments have the advantage that a decorative, highly attractive panel is achieved despite the presence of the second holes, for example a very realistic imitation of a wood panel.

A preferred embodiment is characterized in that the second holes are or contain drilled holes. This embodiment has the advantage that well-known technology is used to produce the second holes.

A preferred embodiment is characterized in that the second holes are formed by means of piercing using needle-shaped elements. This embodiment makes it possible to produce second holes of small cross section, so that the second holes are hardly visible, if at all, on the front side of the panel.

Preferably, the second holes taper. This is understood to mean that at least the bottom of the second holes has a smaller cross section than on the front side of the panel. Such holes may be produced, for example, by means of piercing with needles. The needles may be conical in shape.

Preferably, the density in the wood-based core is higher directly around the second holes. This may be achieved, for example, if the second holes are produced by piercing with needles. Material is then pushed away laterally, as a result of which the material of the wood-based core has a higher density locally around the second holes.

A preferred embodiment is characterized in that the second holes are produced by means of a laser. This makes it possible to produce an optimum distribution pattern of the second holes by means of controlling the laser. In addition, by controlling the laser, it is possible to correctly adjust and select the depth of the second holes, their cross section and their shape.

The use of a laser offers flexibility with regard to the size of the second holes, the distribution of and the distance between the second holes. In addition, it is also possible to adjust the laser in such a manner that it only produces second holes where holes are present on the rear side of the panel, so that optimum acoustic properties are achieved. In addition, it is possible to produce second holes via lasering which, in combination, form a figure or a logo in the panel.

As a result of the use of a laser, the positioning of the holes on the rear side also becomes less critical, since the second holes can be produced in such a way that they end in holes on the rear of the panel by controlling the laser.

It is possible to perform milling on the holes of the panel on the rear side, so that a figure or logo is created on the rear side, and to form the second holes on the front side via lasering at locations where holes are situated on the rear side, so that a figure or logo is also formed on the front side by the combination of second holes.

In embodiments of the invention, the panel has second holes on the front which are present as one or more of lines, triangles or ovals on the front side of the panel. Second holes with such shapes can then be produced by means of a laser.

The use of a laser to form the second holes thus provides freedom with regard to the cross section of the second holes.

A preferred embodiment is characterized in that, in the wood-based core, the material around the second holes is scorched. In such panels, the second holes may be provided by means of a laser. As a result of the energy of the laser used to produce the second holes, the material of the wood-based core is scorched directly at the edge around the second holes.

This scorched material has assumed a black colour due to the scorching. As a result thereof, the second holes are uniform in colour along their entire depth, namely black. This is the case with second holes which end in holes, and with any second holes which do not end in holes. This is advantageous for the appearance of the acoustic panel. If the second holes have not become black due to scorching, second holes which have a hole behind them appear black due to shadow formation; whereas second holes which have no hole behind them on the rear side, show the colour of the wood-based core.

A preferred embodiment is characterized in that the decor layer features an imitation of a wood structure, wherein the second holes are substantially or all provided in the grain of the wood structure. Such an embodiment has the advantage that the second holes are more hidden - and therefore less visible - due to the fact that the second holes are substantially or all provided in the grain. The second holes in such embodiments may preferably be formed by means of a laser.

A preferred embodiment is characterized in that a textile fabric is attached - for example laminated - to the underside of the panel, preferably the textile fabric has a weight of more than 45 grams per square metre. This embodiment has the advantage that the acoustic damping is even better.

The textile fabric may be or contain, for example, a woven fabric, a knitted fabric or a nonwoven.

The textile fabric may be a nonwoven made of staple fibres, preferably this textile fabric is a needle felt, a spunlace nonwoven or the fibres in the nonwoven may be bound by means of adhesive connections. A nonwoven made of staple fibres has the drawback that it has a certain specific volume, useful for the acoustic damping properties of the panel.

In a preferred embodiment of the invention, the panel is a wall panel. Such panels may be used for sound-damping wall coverings.

Preferably, the wall panel runs from floor to ceiling. Preferably, the wall panel has a length or more than 2400 mm.

A preferred wall panel is rectangular and elongate, and is provided with coupling means along its long edges. These may be coupling means as have already been described. More preferably, the wall panel has no coupling means along the short edges.

The second aspect of the invention relates to a wall covering. The wall covering comprises at least two panels as in any of the embodiments of the first aspect of the invention.

The wall covering preferably comprises a substructure to which the wall panels are attached. Preferably, the panels are attached to the substructure by means of securing elements. These securing elements may comprise, for example, clamping or fastener systems, nails, cramps or screws.

With a wall covering according to the invention, there is preferably a layer of glass wool, a layer of rock wool or a nonwoven (e.g. made of polyester fibre) behind the panels. This ensures an even better acoustic damping of the wall covering.

With a view to providing a better illustration of the characteristic features of the invention, the following text describes a number of preferred embodiments by way of example, without any limiting nature, with reference to the appended drawings, in which:
Fig. 1 illustrates a wall covering which comprises panels according to the invention,
Fig. 2 shows a cross section of a panel used in the wall covering from Fig. 1;
Fig. 3 shows a front view of the panel illustrated in cross section in Fig. 2;
Fig. 4 shows the rear side of the panel illustrated in cross section in Fig. 2;
Fig. 5 shows a front view of an alternative panel according to the invention;
Fig. 6 shows the decorative side of an embodiment of the invention; and
Fig. 7 shows the decorative side of an embodiment of the invention; and
Fig. 8 shows test results of panels according to the invention.

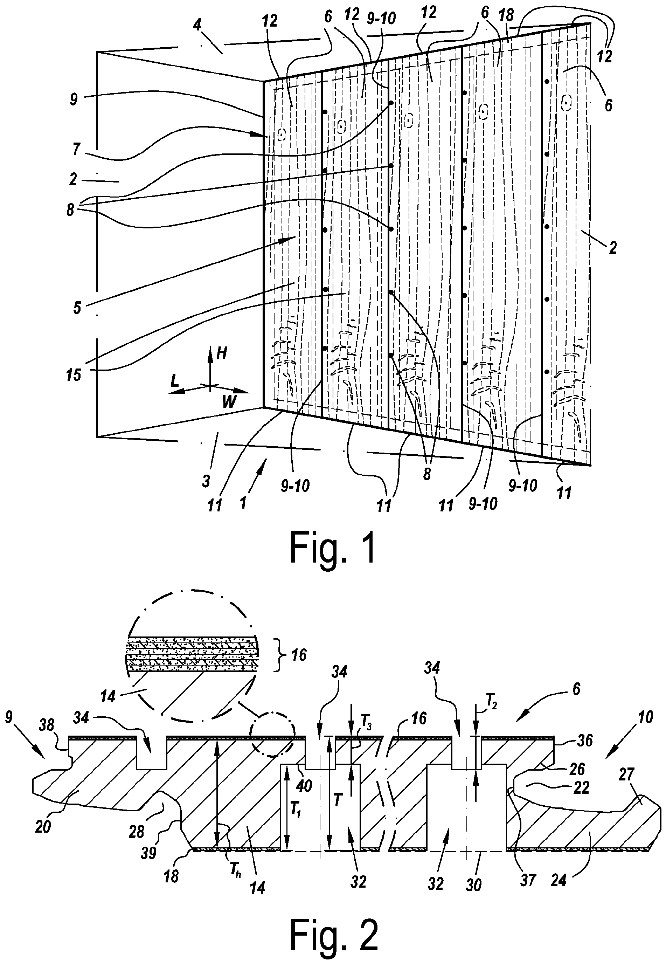

Fig. 1 illustrates a room 1 which comprises walls 2, a floor 3 and a ceiling 4. Furthermore, Fig. 1 illustrates a wall covering 5 which is situated on one of the walls 2. The wall covering 5 comprises wall panels 6, a substructure 7 to which the wall panels 6 are attached and securing elements 8 by means of which the wall panels 6 are attached to the substructure 7. The wall panels 6 have a decorative front side 15 which may have a decorative print and a texture in register with the decorative print, so that a realistic simulation of wood panels is achieved.

A layer of glass wool, a layer of rock wool or a nonwoven may be attached behind the panels 6 (not shown in Fig. 1) to improve the sound-damping properties of the wall covering still further.

In the illustrated example, the wall panels 6 are rectangular and elongate and thus have a pair of long sides 9-10 and a pair of short sides 11-12. The invention does not exclude that the wall panels have a different geometric shape, such as for example square, and may thus, in this case, have two pairs of congruent sides.

In the example, in the attached position of the panels 6, the long sides 9-10 are meant to extend in the height direction H of the room 1. The short sides 11-12 are then meant to extend in the length direction L or, as in the illustrated example, in the width direction W of the room 1.

The length of the wall panels 6 is preferably at least 2400 millimetres, at least 2500 millimetres or at least 2600 millimetres. The width of the wall panels 6 may be, for example, between 300 and 1000 millimetres, including borders.

In the illustrated example, the wall panels 6 are so-called floor-to-ceiling wall panels.

Fig. 2 shows a cross section of a panel 6 used in the wall covering from Fig. 1. The panel 6 comprises a wood-based core 14, for example a Medium Density Fibreboard (MDF) with a thickness of 10 mm.

The front side of the panel has a decor layer 16 laminated onto the wood-based core 14. The decor layer may contain or be made of a resin-coated printed paper layer. This paper layer has a decorative print, for example a wood imitation. The decor layer 16 may also be provided with a texture, for example in register with the decorative print. This results in a highly realistic simulation of a wood panel. This printed paper layer may be resin-coated by means of a melamine formaldehyde resin and may be laminated onto the wood-based core 14 via Direct Pressure Lamination (DPL).

The rear side of the panel may comprise a balance layer 18, for example a paper resin-coated with melamine resin and laminated onto the wood-based core 14 on the rear side of the panel 6, for example by means of Direct Pressure Lamination (DPL), in the same laminating step in which the decor is laminated toto the panel.

The balance layer 18 may provide dimensional stability to the panel 6.

In the example, the total thickness T of the wood-based core 14, the decor layer 16 and the balance layer 18 is 10.2 mm. The thickness Th of the wood-based core is equal to 10 mm in the example from Fig. 2.

On the opposite, long sides 9-10, the panel 6 of the example has coupling parts which make it possible to couple two such panels to each other along the respective edges 9-10, in which case a locking is realised in the coupled state, on the one hand in the direction at right angles to the plane of the coupled panels; and on the other hand in the direction at right angles to the coupled edges and in the plane of the coupled panels. The coupling parts comprise a male part in the form of a tongue 20. The coupling parts comprise a female part in the form of a groove 22, wherein this groove 22 is flanked by a rear lip 24 and a front lip 26. The rear lip 24 extends further on the respective edge 10 than the front lip 26. In the coupled state, the tongue 20 and groove 22 are substantially responsible for the locking in the direction at right angles to the plane of the coupled panels 6. The tongue 20 and the groove 22 comprise locking parts 27, 28, wherein these locking parts 27, 28 are substantially responsible for the locking in the direction at right angles to the coupled edges 9-10 and in the plane of the coupled panels. In the example, the locking parts comprise a projection 27 on the rear lip 24 of the groove 22 and an intermating recess 28 on the rear side of the tongue 20.

The panel 6 from Fig. 2 comprises a plurality of holes 32 on the rear side which have been drilled through the balance layer 18 and as far as into a part of the wood-based core 14. The holes 32 in the example have a depth T1 equal to 8.2 mm. This is the depth measured from the bottom side of the balance layer 18. The holes 32 are directed vertically, that is to say at right angles to the panel 6.

In the example of Fig. 2, no holes are provided on the rear side of the panel along the edge 10 which includes the groove 26 which forms the female coupling part within a distance of 10 mm from the distal end of the rear lip 24 on this edge 10.

In the example of Fig. 2, no holes are provided on the rear side of the panel along the edge 9 which includes the tongue 20 within a distance of 42 mm from the distal end on the front side of the panel on this edge 10.

A textile fabric 30 may be laminated onto the rear side of the panel 6 in order to further improve the acoustic damping properties of the panel 6. This textile fabric 30 may be laminated before or after the holes 32 have been made on the rear side of the panel 6. The textile fabric 30 may be a nonwoven, for example a nonwoven having a thickness of 0.15 mm and a weight of 50 grams per square metre.

The front side of the panel 6 contains grooves 34 which run parallel to the long side edges 9, 10 of the panel 6. The grooves 34 have a depth T2 (see Fig. 2) equal to 3 mm, are 3 mm wide and lie at a distance 32 mm apart. No such grooves are provided on the front side of the panel between the distal end 36 of the front lip 26 and the proximal end 37 of the groove 22 which forms the female coupling part.

On the front side of the panel 6, a groove 34 (or even several) is actually provided in the zone between the distal end 38 on the front side of the panel along the edge 9 which includes the tongue 20 and the proximal end 39 on this edge 9 of the recess 28 on the rear side of the tongue 20. This has the advantage of an appealing uninterrupted image of the grooves 34 on the front side of coupled panels.

The grooves 34 are positioned so that they correspond with holes 32 (which do not extend through the thickness of the panel), so that passages are created through the thickness of the wood-based core.

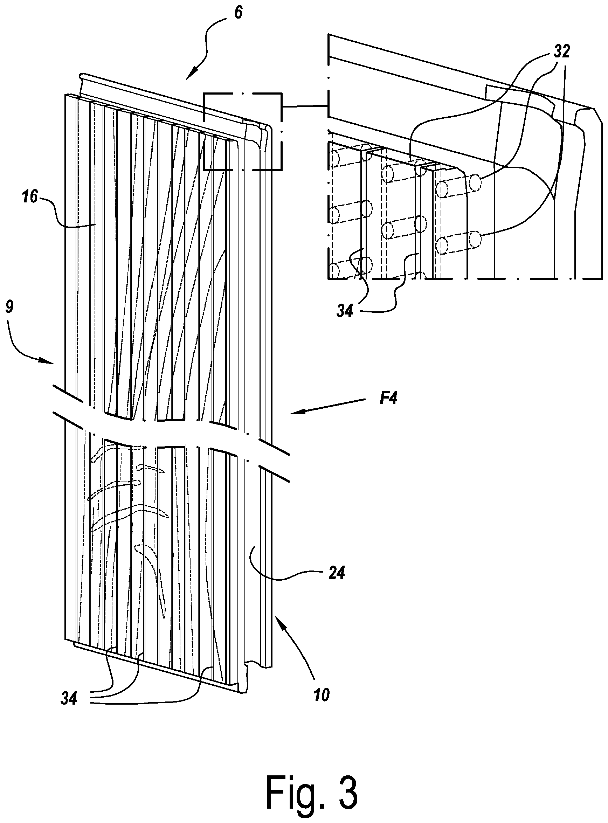

Fig. 3 shows a front view of the panel 6 from Fig. 2. The reference numerals have the same meaning as in Fig. 2.

In the zones where they are present, the grooves 34 constitute 9.4% of the surface of the panel 6. The grooves 34 pass through the decor layer 16 and as far as into the wood-based core 14.

In another example, the grooves are 2.5 mm deep and 3 mm wide and they are situated a distance of 16 mm apart. This means that in the zones provided with such grooves, the grooves constitute 18.8% of the surface of the front side of the panel.

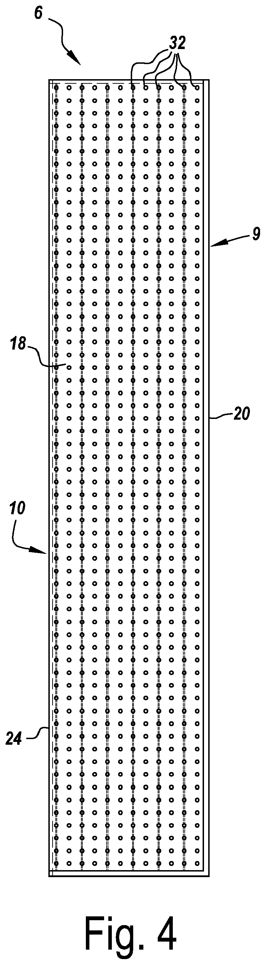

Fig. 4 shows the rear side of the panel 6 from Fig. 2, but without the textile fabric. The holes 32 are drilled in a square pattern on the rear side of the panel. The holes 30 have a diameter of 8 mm, the distance between the centres of the holes 30 is 16 mm. This means that the holes 32 constitute 19.6% of the surface of the rear side of the panel 6.

Alternatively, some holes may be provided on the rear side in those locations where there are second holes on the front side.

The mass of the wood-based core 14 may be coloured black. This has the advantage that the second holes - for example in the form of grooves - on the decorative side of the panel are less visible or not visible at all, even with lighter coloured decors.

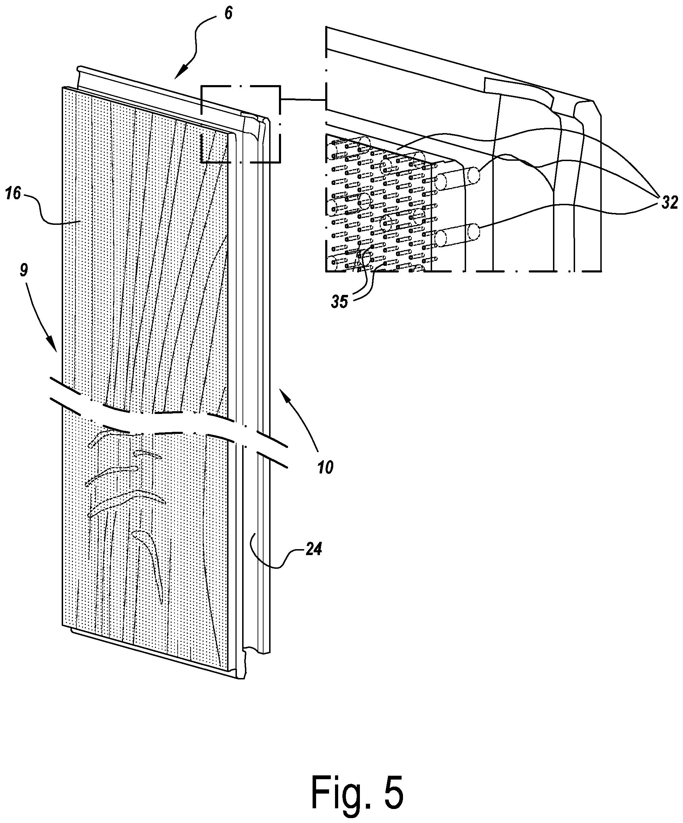

Fig. 5 shows the front view of an alternative panel 6 according to the invention. The rear side of the panel 6 may be provided with holes 32 in the same way as the panel from Figs. 2-4. The front side of the panel - that is the side which comprises the decor layer 16 - has second holes 35 which pas through the decor layer as far as into a part of the thickness of the wood-based core. The second holes 35 do not extend through the wood-based core completely. At least some of the second holes 35 end at least partly in the holes provided in the rear side of the panel 6, so that passages through the thickness of the wood-based core are created.

In the example from Fig. 5, the second holes are arranged in a square pattern and they have a diameter of 0.7 mm, with the distance between the centres of the second holes in the square pattern being 3.75 mm. This means that the second holes 35 in this example constitute 2.7% of the surface of the front side of the panel. The second holes 35 have a depth of 2.5 mm. The cross section of the second holes 35 remains constant throughout the decor layer 16 and as far as into the wood-based core 14.

In another example, the second holes have a diameter of 1.5 mm and are arranged at a distance from one another of 8 mm between their centres in a square pattern. This means that the second holes 35 in this example constitute 2.8% of the surface of the front side of the panel. The second holes 35 in this example have a depth of 3 mm.

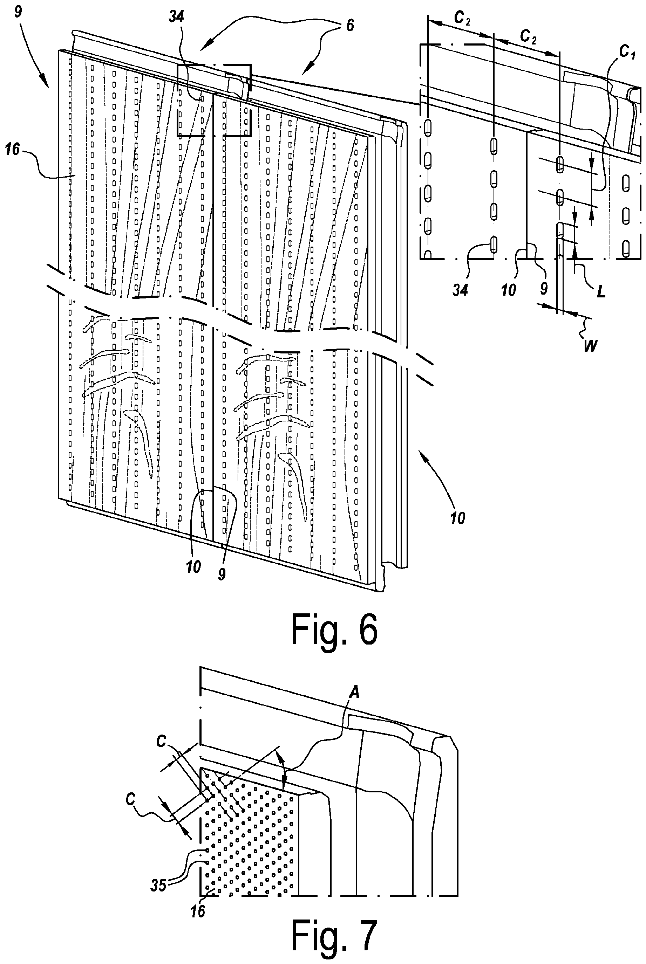

Fig. 6 shows the decorative side of a panel according to the invention. The front side of the panel has grooves 34. The grooves 34 pass through the decor layer as far as into a part of the thickness of the wood-based core. The grooves 34 are rectangular with the short sides being replaced by arcs, in this case by a semicircular arch. The grooves have a length L of 12 mm, a width W of 4 mm. The grooves 34 are arranged in a square pattern. The distances between the centres of neighbouring grooves are C1 equal to 16 mm and C2 equal to 32 mm, respectively. The distance C2 between the centres of grooves along the edges 9, 10 of coupled panels is equal to the distance C2 between centres of grooves within a panel.

As a result thereof, the regular pattern of the grooves 34 along the edges 9, 10 of the panels adjoining at their parallel edges runs on. In this way, there is no disturbance of the visual image of the grooves on the coupled edges 9, 10 of the neighbouring panels in coverings produced by means of these panels.

In this example, the grooves 34 in this example constitute 8.7% of the surface of the decorative side of the panel.

The grooves at least partly end in holes (not shown in Fig. 6) on the rear side of the panel.

In an example of the invention, the holes have a diameter equal to 8 mm on the rear side of the panel. The holes are arranged in a square pattern with the distance between the centres of the holes which form the corners of the square being equal to 16 mm. This means that 16% of the surface of the rear side of the panel is formed by these holes.

This means that, in this example, the percentage of perforation on the decorative side of the panel (equal to 8.7%) multiplied by the percentage of perforation on the rear side of the panel (16%) equals 1.39%.

In this example, the square pattern of the grooves and the square pattern of the holes has been chosen in such a way that they correspond with each other. This means that the grooves on the front side of the panel end in holes on the rear side of the panel.

Fig. 7 shows a detail of the decorative side (side which comprises the decor layer 16) of an embodiment of the invention. The front side of the panel has second holes 35 which are circular and have a diameter of 0.7 mm. The second holes 35 are arranged in parallel rows. The rows make an angle A equal to 45° with the short side of the rectangular panel. The distance C between the lines is 1.75 mm. In the example, the distance on the line of the centres of the second holes 35 is also 1.75 mm.

The rows may also make different angles A with the short side of 45°, for example an angle A of 60°.

Preferably, such a panel has coupling parts on its long sides. These may be coupling parts which consist of a tongue and a groove with associated locking parts. Preferably, there are no |second holes within a distance of 50 mm to the edge which includes the groove and within a distance of 28 mm to the edge which includes the tongue.

In the zone where such a panel contains the second holes 35, the second holes 35 in this example constitute 12.6% of the surface of the decorative side of the panel.

The second holes 35 at least partly end in holes (not shown in Fig. 7) on the rear side of the panel.

In the example from Fig. 2, the bottom 40 of the holes 32 is at a distance T3 of 2 mm from the front of the panel. As already mentioned above, in the example from Fig. 2, the thickness Th of the wood-based core is 10 mm. However, it is preferred if the distance T3 between the bottom 40 of the holes 32 and the front of the panel is smaller than 2 mm; and is, for example, 1.5 mm, or 1 mm, or 0.7 mm.

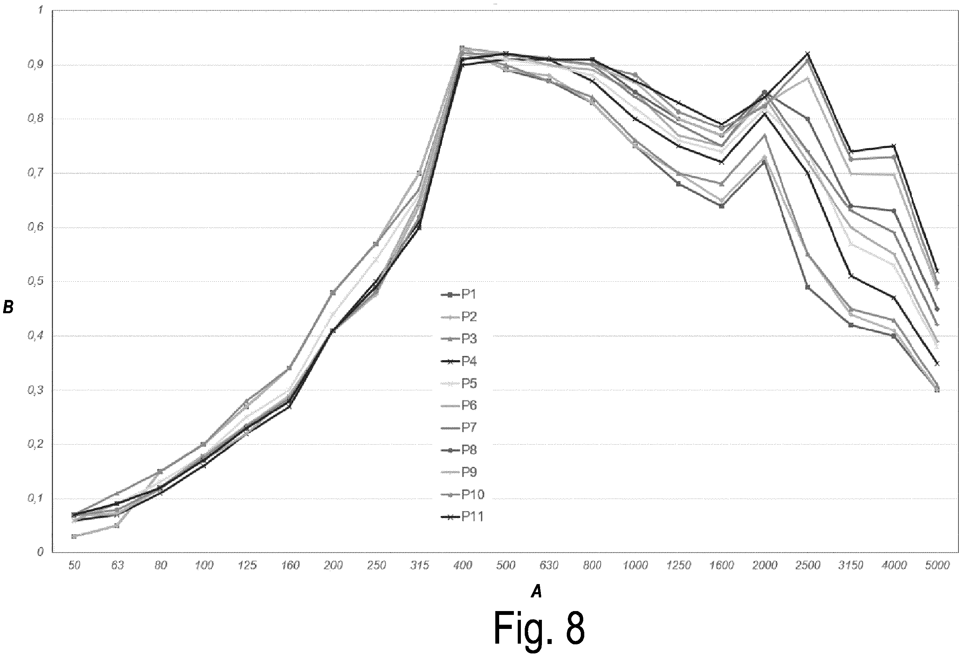

The results of comparative test results for sound absorption measured according to ISO 10543-2:1998 "Acoustics - Determination of sound absorption coefficient and impedance in impedance tubes - Part 2: Transfer-function method" of panels according to the invention with a different distance T3 between the bottom of the holes and the front of the panel are illustrated in Fig. 8. The panel was a panel as shown in Fig. 2. In these tests, the second holes had a cross section of 0.7 mm and a depth of 3 mm. The second holes were arranged in a square pattern, with a distance of 2.47 mm in both directions between the centre of successive second holes. This means that, at the front, 6.3 % of the surface of the panel was formed by the second holes. The holes on the rear had a diameter of 12 mm and were arranged in a square pattern, so that 40% of the surface of the rear was formed by the holes. Tests were conducted with, viewed from the rear of the panel, different depths of the holes, so that panels were obtained in which the bottom of the holes is situated at a different distance from the front of the panel, more specifically:
- Panel P1: the bottom of the holes is situated at a distance of 2.3 mm from the front of the panel:
- Panel P2: the bottom of the holes is situated at a distance of 2.0 from the front of the panel:
- Panel P3: the bottom of the holes is situated at a distance of 1.8 mm from the front of the panel:
- Panel P4: the bottom of the holes is situated at a distance of 1.6 mm from the front of the panel:
- Panel P5: the bottom of the holes is situated at a distance of 1.4 mm from the front of the panel:
- Panel P6: the bottom of the holes is situated at a distance of 1.2 mm from the front of the panel:
- Panel P7: the bottom of the holes is situated at a distance of 1.0 mm from the front of the panel:
- Panel P8: the bottom of the is situated at a distance of 0.8 mm from the front of the panel:
- Panel P9: the bottom of the holes is situated at a distance of 0.7 mm from the front of the panel:
- Panel P10: the bottom of the holes is situated at a distance of 0.6 mm from the front of the panel:
- Panel P11: the bottom of the holes is situated at a distance of 0.5 mm from the front of the panel:

In ordinate B, Fig. 8 shows the sound absorption α (according to ISO 10543-2:1998) measured as a function of the wavelength of the sound B (in Hz). Fig. 8 clearly shows the improved acoustic damping - in particular for higher wavelengths of the sound - at lower values for the distance between the bottom of the holes and the front of the panel.

The present invention furthermore relates to various preferred embodiments as defined in the numbered paragraphs below:
1.- Panel, wherein the panel has a wood-based core and a decor layer on the front side which is laminated onto the wood-based core;
   characterized in that the panel has a plurality of holes on the rear side which are preferably directed vertically and do not extend through the full thickness of the wood-based core;
   wherein the front side of the panel has second holes 34, 35 which pass - preferably vertically - through the decor layer and as far as into a part of the thickness of the wood-based core;
   wherein at least some of the second holes 34, 35 at least partly end in the holes, so that passages are created through the thickness of the wood-based core.
2.- Panel in accordance with numbered paragraph 1, characterized in that the depth in the wood-based core of the holes is greater than the depth in the wood-based core of the second holes 34, 35; preferably wherein the depth in the wood-based core of the holes is at least double the depth in the wood-based core of the second holes; more preferably, the depth in the wood-based core of the holes is at least three times the depth in the wood-based core of the second holes.
3.- Panel in accordance with any of the preceding numbered paragraphs, characterized in that the thickness Th of the wood-based core is at least 8 mm, and preferably is at least 10 mm.
4.- Panel in accordance with any of the preceding numbered paragraphs, characterized in that the bottom of the holes is situated at a distance T3 of less than 2 mm from the front side of the panel; preferably wherein the bottom of the holes is situated at a distance of less than 1.5 mm from the front side of the panel, more preferably wherein the bottom of the holes is situated at a distance of less than 1 mm from the front side of the panel, more preferably wherein the bottom of the holes is situated at a distance of less than 0.8 mm from the front side of the panel, more preferably wherein the bottom of the holes is situated at a distance of less than 0.6 mm from the front side of the panel; and more preferably of at least 0.5 mm from the front side of the panel.
5.- Panel in accordance with any of the preceding numbered paragraphs, characterized in that the bottom of the holes is situated at a distance T3 from the front side of the panel which is less than 20 % of the thickness of the wood-based core; preferably less than 15 % of the thickness of the wood-based core, more preferably less than 8 % of the thickness of the wood-based core, more preferably less than 6 % of the thickness of the wood-based core; and more preferably of at least 5 % of the thickness of the wood-based core.
6.- Panel in accordance with any of the preceding numbered paragraphs, characterized in that the individual cross section of the second holes is smaller than the individual cross section of the holes; preferably wherein the individual cross section of the second holes is smaller than 0.8 %; and more preferably is smaller than 0.5 % of the individual cross section of the holes.
7.- Panel in accordance with any of the preceding numbered paragraphs, characterized in that the decor layer comprises a resin-coated printed paper layer.
8.- Panel in accordance with numbered paragraph 7, characterized in that the resin-coated printed paper layer is laminated directly onto the wood-based core.
9.- Panel in accordance with any of the preceding numbered paragraphs, characterized in that the decor layer is laminated onto the wood-based core by means of Direct Pressure Lamination (DPL).
10.- Panel in accordance with any of the preceding numbered paragraphs, characterized in that a balance layer, for example a resin-coated paper layer, is laminated onto the rear side of the wood-based core, with the plurality of holes running through this balance layer.
11.- Panel in accordance with any of the preceding numbered paragraphs, characterized in that the wood-based core is or comprises a particleboard or a wood fibreboard (preferably a Medium Density Fibreboard or a High Density Fibreboard).
12.- Panel in accordance with any of the preceding numbered paragraphs, characterized in that the individual cross section of the holes is greater than the individual cross section of the second holes.
13.- Panel in accordance with any of the preceding numbered paragraphs, characterized in that the holes have a circular cross section, preferably with a diameter of less than 12 mm, more preferably with a diameter of less than 10 mm.
14.- Panel in accordance with any of the preceding numbered paragraphs, characterized in that the holes are arranged in a square pattern.
15.- Panel in accordance with any of the preceding numbered paragraphs, characterized in that the holes form at least 4 % of the surface of the rear side of the wood-based core, preferably at least 10 %, more preferably at least 15 %, more preferably at least 20 %, more preferably at least 30 %.
16.- Panel in accordance with any of the preceding numbered paragraphs, characterized in that the second holes 35, 35 form at least 5 % of the surface of the decorative side of the panel, preferably at least 8 %, more preferably at least 10 %, more preferably at least 12 %, more preferably at least 14 %.
17.- Panel in accordance with any of the preceding numbered paragraphs, characterized in that the percentage of perforation on the decorative side of the panel multiplied by the percentage of perforation on the rear side of the panel is at least 1 %, preferably is at least 1.5 %, preferably is at least 2.5 %, more preferably is at least 4 %, more preferably is less than 10 %, and more preferably is less than 6 %.
18.- Panel in accordance with any of the preceding numbered paragraphs 1 - 17, characterized in that the second holes are grooves, preferably having a width of less than 6 mm, more preferably having a width of less than 5 mm more preferably having a width of less than 4 mm, more preferably having a width of less than 3.5 mm.
19.- Panel in accordance with numbered paragraph 18, characterized in that the panel is rectangular and elongate, and in that the grooves run parallel with one of the sides 9, 10 of the panel.
20.- Panel in accordance with any of the preceding numbered paragraphs 18 - 19, characterized in that the grooves have a length of less than 100 mm, preferably less than 50 mm, more preferably less than 30 mm, more preferably less than 15 mm.
21.- Panel in accordance with any of the preceding numbered paragraphs 18 - 20, characterized in that the grooves have a rectangular cross section, optionally with a rounding on the short sides of the rectangular cross section or wherein the short sides are arch-shaped.
22.- Panel in accordance with any of the preceding numbered paragraphs 18 - 21, characterized in that the grooves have vertical walls.
23.- Panel in accordance with any of the preceding numbered paragraphs 18 - 22, characterized in that the grooves are positioned in such a way that they correspond with holes, so that passages through the thickness of the wood-based core are produced.
24.- Panel in accordance with any of the preceding numbered paragraphs 18 - 23, characterized in that the grooves are arranged so as to be evenly distributed, preferably in a square pattern.
25.- Panel in accordance with numbered paragraph 24, characterized in that the grooves are arranged in such a manner that the regular pattern continues along the edges of two panels which adjoin one another at their parallel edges.
26.- Panel in accordance with any of the preceding numbered paragraphs 18 - 25, characterized in that, in at least one direction, the distance between the centre of the holes is equal to or is an integer multiple of the distance between the centre of the grooves, or in that, in at least one direction, the distance between the centre of the grooves is equal to or is an integer multiple of the distance between the holes.
27.- Panel in accordance with any of the preceding numbered paragraphs 1 - 17, characterized in that the second holes have a cross section, preferably with a diameter or equivalent diameter of less than 3 mm, more preferably less than 2 mm, more preferably less than 1.5 mm, more preferably less than 1 mm.
28.- Panel in accordance with numbered paragraph 27, characterized in that the second holes are arranged in a square pattern.
29.- Panel in accordance with numbered paragraph 27, characterized in that the second holes are arranged in parallel rows, wherein the panel is rectangular, wherein the rows make an angle A with the short edges of the panel of between 20° and 70°, preferably between 35° and 60°.
30.- Panel in accordance with any of the preceding numbered paragraphs, characterized in that the panel is rectangular with two long edges and two short edges, wherein there are no second holes within a distance of at least 10 mm, and preferably within a distance of at least 20 mm, and more preferably within a distance of at least 30 mm, and more preferably within a distance of at least 40 mm from the long edges.
31.- Panel in accordance with any of the preceding numbered paragraphs, characterized in that the panel is rectangular, either square or elongate, with the panel being provided, on at least two opposite edges 9, 10, with coupling parts which make it possible for two of such panels to be coupled to each other on the respective edges, wherein a locking is realised in the coupled state, on the one hand in the direction at right angles to the plane of the coupled panels; and on the other hand in the direction at right angles to the coupled edges and in the plane of the coupled panels; wherein the coupling parts comprise at least a male part in the form of a tongue, wherein the coupling parts comprise at least a female part in the form of a groove, wherein this groove is flanked by a rear lip and a front lip, preferably wherein the rear lip projects further on the respective edge than the front lip.
32.- Panel in accordance with numbered paragraph 31, characterized in that the coupling parts are substantially configured as a tongue and a groove delimited by a front lip and a rear lip, wherein this tongue and groove are substantially responsible for the locking in the direction at right angles to the plane of the coupled panels; and wherein the tongue and the groove comprise locking parts 27, 28, wherein these locking parts are substantially responsible for the locking in the direction at right angles to the coupled edges and in the plane of the coupled panels; preferably the locking parts comprise a projection on the rear lip of the groove and a recess cooperating therewith on the rear side of the tongue.
33.- Panel in accordance with any of the preceding numbered paragraphs 18 - 26 and in accordance with numbered paragraph 31 of 32, characterized in that the grooves are parallel with the opposite edges 9, 10 of the panel which are provided with the coupling parts, wherein no grooves are provided in the surface on the front side of the panel between the distal end of the front lip and the proximal end of the groove which forms the female coupling part.
34.- Panel in accordance with any of the preceding numbered paragraphs 31 - 33, characterized in that no second holes are provided on the front side of the panel in the zone of the panel between the distal end of the front lip and the proximal end of the groove which forms the female coupling part.
35.- Panel in accordance with any of the preceding numbered paragraphs 31 - 34, characterized in that no second holes are provided on the front side of the panel in the zone of the panel along the edge which includes the tongue within a distance of at least 20 mm, and preferably within a distance of at least 25 mm, from the distal end on the front side of this edge.
36.- Panel in accordance with any of the preceding numbered paragraphs 31 - 34, characterized in that at least one second hole 34, 35 is provided on the front side of the panel in the zone between the distal end on the front side of the panel along the edge which includes the tongue and the proximal end on this edge of the recess on the rear side of the tongue.
37.- Panel in accordance with any of the preceding numbered paragraphs 31 - 36, characterized in that no holes are provided on the rear side of the panel along the edge which includes the groove which forms the female coupling part within a distance of at least 8 mm, and preferably of at least 10 mm, from the distal end of the rear lip on this edge.
38.- Panel in accordance with any of the preceding numbered paragraphs 31 - 36, characterized in that no holes are provided on the rear side of the panel along the edge which includes the tongue within a distance of at least 30 mm, and preferably of at least 40 mm, from the distal end on the front side of the panel on this edge.
39.- Panel in accordance with any of the preceding numbered paragraphs, characterized in that the wood-based core is coloured black.
40.- Panel in accordance with any of the preceding numbered paragraphs, characterized in that the decor layer comprises a decorative print and a texture, wherein the texture is in register with the print.
41.- Panel in accordance with any of the preceding numbered paragraphs, characterized in that a textile fabric is attached - for example laminated - to the underside of the panel, preferably the textile fabric has a weight of more than 45 grams per square metre.
42.- Panel in accordance with numbered paragraph 41, characterized in that the textile fabric is or contains a woven fabric, a knitted fabric or a nonwoven.
43.- Panel in accordance with numbered paragraph 41, characterized in that the textile fabric (30) is a nonwoven made of staple fibres, preferably this textile fabric is a needle felt, a spunlace nonwoven or the fibres in the nonwoven are bound by means of adhesive connections.
44.- Panel in accordance with any of the preceding numbered paragraphs, characterized in that the panel is a wall panel.
45.- Panel in accordance with any of the preceding numbered paragraphs, characterized in that the second holes contain or are drilled holes.
46.- Panel in accordance with any of the preceding numbered paragraphs 1 - 44, characterized in that the second holes are formed by means of piercing using needle-shaped elements.
47.- Panel in accordance with any of the preceding numbered paragraphs 1 - 44 or in accordance with numbered paragraph 43, characterized in that the second holes taper.
48.- Panel in accordance with any of the preceding numbered paragraphs 1 - 44, characterized in that the density in the wood-based core is higher directly around the second holes.
49.- Panel in accordance with any of the preceding numbered paragraphs 1 - 44, characterized in that the second holes are produced by means of a laser.
50.- Panel in accordance with any of the preceding numbered paragraphs 1 - 44, characterized in that, in the wood-based core, the material around the second holes is scorched.
51.- Panel in accordance with any of the preceding numbered paragraphs, characterized in that the decor layer features an imitation of a wood structure, wherein the second holes are substantially or all provided in the grain of the wood structure.
52.- Wall covering, characterized in that the wall covering comprises at least two panels in accordance with any of the preceding numbered paragraphs.
53.- Wall covering in accordance with numbered paragraph 52, characterized in that a layer of glass wool, a layer of rock wool or a nonwoven (e.g. made of polyester fibre) is situated behind the panels.

The present invention is by no means limited to the above-described embodiments, but such panels can be realised according to different variants without departing from the scope of the present invention.

## Claims

1. Panel, wherein the panel (6) has a wood-based core (14) and a decor layer (16) on the front side which is laminated onto the wood-based core (14);
**characterized in that** the panel has a plurality of holes (32) on the rear side which are preferably directed vertically and do not extend through the full thickness of the wood-based core (14);
wherein the front side of the panel (6) has second holes (34, 35) which pass - preferably vertically - through the decor layer (16) and as far as into a part of the thickness of the wood-based core (14);
wherein at least some of the second holes (34, 35) at least partly end in the holes (32), so that passages are created through the thickness of the wood-based core (14).

2. Panel in accordance with Claim 1, **characterized in that** the second holes (35) have a circular cross section, preferably with a diameter of less than 3 mm.

3. Panel in accordance with Claims 1 or 2, **characterized in that** the cross section of the second holes (35) remains constant throughout the decor layer (16) and at least as far as into a part of the thickness of the wood-based core (14).

4. Panel in accordance with any of the preceding claims, **characterized in that** the bottom (40) of the holes (32) is situated at a distance (T3) of less than 2 mm from the front side of the panel (6); preferably wherein the bottom of the holes (32) is situated at a distance of less than 1.5 mm from the front side of the panel, more preferably wherein the bottom of the holes (32) is situated at a distance of less than 1 mm from the front side of the panel (6), more preferably wherein the bottom of the holes (32) is situated at a distance of less than 0.8 mm from the front side of the panel (6), more preferably wherein the bottom of the holes (32) is situated at a distance of less than 0.6 mm from the front side of the panel (6); and more preferably of at least 0.5 mm from the front side of the panel (6).

5. Panel in accordance with any of the preceding claims, **characterized in that** the bottom (40) of the holes (32) is situated at a distance (T3) from the front side of the panel which is less than 20 % of the thickness (Th) of the wood-based core (14); preferably less than 15 % of the thickness (Th) of the wood-based core (14), more preferably less than 8 % of the thickness (Th) of the wood-based core (14), more preferably less than 6 % of the thickness (Th) of the wood-based core (14); and more preferably of at least 5 % of the thickness (Th) of the wood-based core (14).

6. Panel in accordance with any of the preceding claims, **characterized in that** the decor layer (16) contains a resin-coated printed layer papier and/or wherein the wood-based core (14) is or comprises a particleboard or a wood fibreboard (preferably a Medium Density Fibreboard or a High Density Fibreboard).

7. Panel in accordance with any of the preceding claims, **characterized in that** the holes (32) are arranged in a square pattern.

8. Panel in accordance with any of the preceding claims, **characterized in that** the second holes (34, 35) form at least 5 % of the surface of the decorative side of the panel, preferably at least 8 %, more preferably at least 10 %, more preferably at least 12 %, more preferably at least 14 %.

9. Panel in accordance with any of the preceding claims, **characterized in that** the second holes (35) have a cross section, preferably with a diameter or equivalent diameter of less than 3 mm, more preferably less than 2 mm, more preferably less than 1.5 mm, more preferably less than 1 mm.

10. Panel in accordance with any of the preceding claims, **characterized in that** the panel (6) is rectangular, either square or elongate, with the panel (6) being provided, on at least two opposite edges (9, 10), with coupling parts which make it possible for two of such panels (6) to be coupled to each other on the respective edges, wherein a locking is realised in the coupled state, on the one hand in the direction at right angles to the plane of the coupled panels; and on the other hand in the direction at right angles to the coupled edges and in the plane of the coupled panels; wherein the coupling parts comprise at least a male part in the form of a tongue (20), wherein the coupling parts comprise at least a female part in the form of a groove (22), wherein this groove is flanked by a rear lip (24) and a front lip (26), preferably wherein the rear lip (26) projects further on the respective edge than the front lip (24).

11. Panel in accordance with Claim 10, **characterized in that** no second holes (34, 35) are provided on the front side of the panel (6) in the zone of the panel (6) between the distal end (36) of the front lip (26) and the proximal end (37) of the groove (22) which forms the female coupling part, and/or wherein no second holes (34, 35) are provided on the front side of the panel in the zone of the panel on the edge (9) which includes the tongue (20) within a distance of at least 20 mm, and preferably within a distance of at least 25 mm, from the distal end (38) on the front side of this edge (9)

12. Panel in accordance with any of the preceding Claims 9 - 11, **characterized in that** no holes (32) are provided on the rear side of the panel (6) on the edge (10) which includes the groove (22) which forms the female coupling part within a distance of at least 8 mm, and preferably of at least 10 mm, from the distal end of the rear lip (34) on this edge (10), and/or wherein no holes (32) are provided on the rear side of the panel (6) on the edge (9) which includes the tongue (20) within a distance of at least 30 mm, and preferably of at least 40 mm, from the distal end on the front side of the panel (6) on this edge (10).

13. Panel in accordance with any of the preceding claims, **characterized in that** the wood-based core (14) is coloured black and/or wherein a textile fabric (30) is attached - for example laminated -to the underside of the panel (6), preferably the textile fabric (30) has a weight of more than 45 grams per square metre.

14. Panel in accordance with any of the preceding claims, **characterized in that** the decor layer (16) features an imitation of a wood structure, wherein the second holes (34, 35) are substantially or all provided in the grain of the wood structure.

15. Wall covering **characterized in that** the wall covering (5) comprises at least two panels (6) in accordance with any of the preceding claims; and wherein a layer of glass wool, a layer of rock wool or a nonwoven (e.g. made of polyester fibre) is situated behind the panels (6).
